# EUROPÄISCHE PATENTSCHRIFT

(11) **EP 2 079 782 B1**
(45) Veröffentlichungstag und Bekanntmachung des Hinweises auf die Patenterteilung: **23.05.2012**
(21) Anmeldenummer: 07820455.9
(22) Anmeldetag: 21.09.2007
(51) Int. Cl.: C08J 5/18, C08L 67/04, C08L 45/00, B29C 55/16

(54) **SIMULTAN VERSTRECKTE OPAKE FOLIE AUS PLA**
SIMULTANEOUSLY DRAWN OPAQUE FILM MADE OF PLA
FILM OPAQUE À BASE D'ACIDE POLYLACTIQUE ÉTIRÉ SIMULTANÉMENT

(30) Priorität: 05.10.2006 DE 102006047058
(43) Veröffentlichungstag der Anmeldung: 22.07.2009
(73) Patentinhaber: Treofan Germany GmbH & Co.KG, 66539 Neunkirchen (DE)
(72) Erfinder: BUSCH, Detlef, 66740 Saarlouis (DE); SCHMITZ, Bertram, 57200 Sarreguemines (FR)
(74) Vertreter: Mai, Dörr, Besier
(86) Internationale Anmeldenummer: PCT/EP2007/060031
(87) Internationale Veröffentlichungsnummer: WO 2008/040646

(56) Entgegenhaltungen:
- EP-A- 1 127 912
- WO-A-02/088230
- DE-A1- 19 840 991
- US-A1- 2002 160 215
- DATABASE WPI Week 199340 Derwent Publications Ltd., London, GB; AN 1993-317613 XP002461809 & JP 05 230253 A (UNITIKA LTD) 7. September 1993 (1993-09-07)
- DATABASE WPI Week 200606 Derwent Publications Ltd., London, GB; AN 2006-050115 XP002461810 -& JP 2005 344059 A (MITSUI CHEM INC) 15. Dezember 2005 (2005-12-15)

## Beschreibung

Die vorliegende Erfindung betrifft ein Verfahren zur Herstellung einer opaken, biaxialen orientierten Polyhydroxycarbonsäure-Folie, die mindestens eine Schicht umfaßt, welche ein Polymeres auf Basis von Hydroxycarbonsäuren und ein Cycloolefincopolymer (COC) enthält. Die Erfindung betrifft ferner ein Verfahren zur Herstellung der PHC-Folie sowie ihre Verwendung.

Opake biaxial orientierte Folien sind im Stand der Technik bekannt. Diese Folien zeichnen sich durch eine glänzende, weiße perlmuttartige Optik aus, welche für gewisse Anwendungszwecke erwünscht ist. Zusätzlich haben derartige Folien eine reduzierte Dichte, die dem Anwender eine erhöhte Ausbeute ermöglicht.

EP 1 068 949 (DE 199 32 384) beschreibt eine weiße, biaxial orientierte PET-Folie mit mindestens einer Schicht, welche ein Cycloolefincopolymeres (COC) in einer Konzentration von 2 bis 60 Gew.-%, bezogen auf diese Schicht enthält. Die Glasübergangstemperatur des Cycloolefincopolymeren (COC) liegt im Bereich von 70 bis 270 °C. Es ist beschrieben, daß das COC zur Weißfärbung der PET-Folie führt. Eine simultane, d.h. gleichzeitige Verstreckung in beide Richtungen (MD-Richtung und TD-Richtung) zur Herstellung der Folie wird nicht empfohlen, da diese Simultanstreckung nicht zu dem gewünschten Weißgrad führt.

WO 03/033574 beschreibt die Herstellung einer opaken Folie mit Vakuolen mittels Simultanstreckverfahren. Diese Folien sind aus Polypropylen und enthalten spezielle anorganische Vakuolen-initierende Teilchen. Es ist beschrieben, daß die Teilchen eine spezielle Form oder eine spezielle Größenverteilung aufweisen müssen, um Vakuolen trotz Simultanstreckung zu initiieren. Es ist angegeben, daß die Partikel stäbchen- oder plättchenförmig sein müssen. Alternativ können auch kugelförmige Teilchen eingesetzt werden, wenn diese eine Mindestgröße von 3µm und eine enge Größenverteilung aufweisen.

EP 1 112 167 erläutert die Probleme, die bei der Übertragung bekannter Technologien vom sequentiellen Stenter-Prozeß auf Simultanstreckverfahren auftreten. Insbesondere erzeugen unverträgliche Zusatzstoffe in Polypropylenfolie bei der Herstellung mittels Simultanstreckverfahren keine Vakuolen, wie dies bei sequentieller Verstreckung der Fall ist. EP 1 112 167 beschreibt die Lösung dieses Problems über die Verwendung von Schäumungsmittel bei der Simultanverstreckung. Die Schäumungsmittel zersetzen sich bei den Extrusions-Temperaturen und führen bei der Simultanverstreckung zu kleinen gasgefüllten Bläschen, ähnlich den durch unverträgliche Partikel erzeugten Vakuolen. Opazität und Weißgrad dieser Polypropylenfolien sind jedoch sehr unbefriedigend.

WO 02/088230 beschreibt opake biaxial orientierte PLA-Folien, die in mindestens einer Schicht 0,5 bis 30 Gew-% COC, mit einer Glasübergangstemperatur von 70 bis 270 °C, enthalten. Dieses spezielle COC bewirkt die Bildung von Vakuolen bei der Herstellung der PLA-Folie mittels sequentieller biaxialer Verstreckung. Weitere Verfahren zur Herstellung der PLA-Folie sind nicht angegeben. Die mechanischen Eigenschaften der Folie sind verbesserungsbedürftig.

Bei der Suche nach weiteren Vakuolen-initierenden Zusätzen für PLA Folien zeigte sich, daß die Mechanismen bei der Vakuolenbildung in einer PLA Matrix verschieden sind von denen in einer Polypropylen-Matrix. Es scheint bei PLA-Folien nicht nur auf die Unverträglichkeit der Partikel anzukommen, da mit dem PLA unverträgliche Teilchen, wie beispielsweise CaCO3 oder Polypropylen, beim biaxialen Verstrecken von PLA gar nicht oder nur in einem völlig unzureichenden Maße zur Vakuolen-Bildung führen. De facto sind die COC-Polymeren gemäß der WO 02/088230 bis heute die einzigen bekannten, effektiv wirksamen Vakuolenbildner in biaxial verstreckten PLA-Folien.

Grundsätzlich beruht die Bildung von Vakuolen auf der Erzeugung von Mikrorissen an der Grenzfläche zwischen dem Polymeren und dem partikelförmigen Zusatzstoff während der Längsstreckung. Bei der anschließenden Querstreckung reißen diese feinen Längsrisse zu luftgefüllten geschlossenen Hohlräumen auf, Es erscheint daher plausibel, daß die Erzeugung von Vakuolen bei einer Simultanverstreckung ungleich schwieriger ist als bei der sequentiellen Verstreckung. In der Tat zeigt sich in der Praxis, daß die üblichen in Polypropylen unverträglichen Teilchen wie CaCO3 oder PBT bei der simultanen Verstreckung einer Polypropylen-Folie gar nicht oder nur bei ausgewählter Teilchenform oder Teilchengröße (siehe WO03/033574) Vakuolen erzeugen. Daher wurde für diesen Prozeß eine alternative Technologie zur Vakuolenerzeugung über Schäumungsmittel entwickelt.

Ähnliche Probleme sind über die Herstellung von Vakuolen-haltigen Folien aus Polyethylenterephthalat bekannt. Auch bei diesen Folien ist die Erzeugung von Vakuolen bei der sequentiellen Verstreckung technisch viel schwieriger als bei Polypropylenfolien, Daher wird der LISIM Prozeß zur Herstellung von vakuolenhaltigen PET Folien ausdrücklich nicht empfohlen (siehe EP 1 068 949).

Die Aufgabe der vorliegenden Erfindung bestand darin, umweltfreundliche Folien und Verpackungen zur Verfügung zu stellen, welche zum einen aus nachwachsenden Rohstoffen hergestellt und zum anderen umweltfreundlich entsorgt werden können. Darüber hinaus sollen die Folien ein opakes Aussehen aufweisen und eine Dichte unter 1,25 g/cm3 aufweisen. Des weiteren soll die Folie gute mechanische Eigenschaften haben.

Die Aufgabe wird gelöst durch ein Verfahren zur Herstellung einer Polyhydroxycarbonsäure-Folie, dessen kennzeichnende Merkmale darin bestehen, daß man eine Schmelze aus Polyhydroxycarbonsäure (PHC), vorzugsweise PLA und 0,5 bis 30 Gew.-% Cycloolefincopolymer (COC), bezogen auf das Gewicht der Mischung, und gegebenenfalls weiteren Zusatzstoffen extrudiert, wobei diese Schmelzetemperatur mindestens 10°C über der Glasübergangstemperatur Tg des COC liegt und die Schmelze zu einer Vorfolie abkühlt, und anschließend die abgekühlte Vorfolie bei einer Temperatur von mehr als 40°C simultan in Längs- und Querrichtung verstreckt .

Aus der Gesamtheit der vorstehend beschriebenen bekannten Lehren über Simultan-verstreckung und Vakuolenbildung in Folien aus verschiedenen Polymeren wie PP, PLA oder PET wurde ursprünglich geschlossen, daß die Herstellung einer vakuolenhaltigen opaken Folie aus PLA mittels Simultanverstreckung praktisch nicht möglich ist, da die Erzeugung von Vakuolen durch Simultanverstreckung im allgemeinen und die Bildung von Vakuolen speziell in PLA-Folien besonders problematisch ist. Es war daher völlig unerwartet, daß mittels Simultanverstreckung eine opake PLA-Folie mit reduzierter Dichte und Vakuolen hergestellt werden kann.

Unter einer reduzierten Dichte wird im Sinne der vorliegenden Erfindung eine Folie verstanden, deren Dichte unterhalb der Dichte liegt, welche sich rechnerisch aus der Zusammensetzung und aus der Dichte der Ausgangsstoffe ergibt. Eine reduzierte Dichte für PLA Folien ist eine Dichte von < 1,25 g/cm³.

Unter einer opaken, biaxial orientierten PHC-Folie wird im Sinne der vorliegenden Erfindung eine Folie bezeichnet, die einen Weißgrad von mindestens 10 %, bevorzugt von mehr als 20 % und eine Opazität von mehr als 20 %, bevorzugt mehr als 25 % aufweist. Im allgemeinen beträgt die Lichtdurchlässigkeit nach ASTM-D 1003-77 solcher opaken Folien weniger 95 %, vorzugsweise weniger als 75 %.

Zum Erzielen der gewünschten Optik und der reduzierten Dichte muß der Anteil an Cycloolefincopolymeren (COC) in der Schicht größer als 0,5 Gew.-%, bezogen auf das Gewicht der Schicht sein. Ist der Cycloolefincopolymer (COC)-Gehalt andererseits größer als 30Gew.-%, kann die Folie nicht umweltfreundlich entsorgt werden.

Weiterhin ist es notwendig, daß die Glasübergangstemperatur des eingesetzten Cycloolefincopolymeren (COC) größer als 70 °C ist. Es wurde gefunden, daß mit einem COC mit einer Glasübergangstemperatur von weniger als 70°C hinsichtlich der Dichte-Reduktion der Folie und hinsichtlich der Folienoptik nicht die gewünschten Effekte erzielt werden. Des weiteren ist bei einer Glasübergangstemperatur des COC von kleiner als 70 °C das Rohstoffgemisch schlecht verarbeitbar (schlecht extrudierbar), der gewünschte Weissgrad wird nicht mehr erreicht und das eingesetzte Regenerat führt zu einer Folie, die zu einer erhöhten Gelbfärbung neigt. Ist andererseits die Glasübergangstemperatur des ausgewählten Cycloolefincopolymeren (COC) größer als 270°C, so läßt sich die Rohstoffmischung im Extruder nicht mehr ausreichend homogen dispergieren. Dies hat dann eine Folie mit inhomogenen Eigenschaften zur Folge.

In einer bevorzugten Ausführungsform des erfindungsgemässen Verfahrens zur Herstellung der Folie liegt die Glasübergangstemperatur der verwendeten COC's in einem Bereich von 90 bis 200°C und in der besonders bevorzugten Ausführungsform in einem Bereich von 110 bis 160°C.

Es wurde gefunden, daß durch Simultanstreckung eine opake, glänzende Folie mit einer reduzierten Dichte, verbesserten mechanischen Eigenschaften und ausgewählten Schrumpfwerten hergestellt werden kann. überraschenderweise bilden sich durch den Zusatz von COC Vakuolen in der PHC-Polymermatrix trotzdem die Folie nicht sequentiell, sondern simultan verstreckt wurde. Unerwartet zeigt die Folie eine erhöhte Reißfestigkeit in Längsrichtung, welche bei einer sequentiell verstreckten, Vakuolen-haltigen Folie nicht erreicht wird. Überraschenderweise zeichnen sich die simultan verstreckten opaken PHC-Folien durch einen besonders niedrigen Schrumpf aus, der gegenüber transparenten PHC-Folien, die unter vergleichbaren Verfahrensbedingungen hergestellt werden, deutlich reduziert ist.

Die nach dem erfindungsgemässen Verfahren hergestellte Folie ist einschichtig oder mehrschichtig aufgebaut. Einschichtige Ausführungsformen sind wie die nachstehend beschriebene COC-haltige Schicht aufgebaut. Mehrschichtige Ausführungsformen sind mindestens zweischichtig und umfassen immer die COC-haltige Schicht und zumindest eine weitere Schicht, wobei die COC-haltige Schicht die Basisschicht sein kann, gegebenenfalls kann auch die Zwischen- oder die Deckschicht der mehrschichtigen Folie die COC-haltige Schicht sein. In einer bevorzugten Ausführungsform bildet die COC-haltige Schicht die Basisschicht der Folie mit mindestens einer, vorzugsweise mit beidseitigen Deckschicht/en, wobei gegebenenfalls einseitig eine oder beidseitig Zwischenschicht/en vorhanden sein kann/können. Die Folie kann auch mehrere COC-haltige Schicht mit Vakuolen aufweisen.

In einer weiteren bevorzugten Ausführungsform bildet die COC-haltige Schicht eine Zwischenschicht der Mehrschichtfolie. Weitere Ausführungsformen mit COC-haftigen Zwischenschichten sind fünfschichtig aufgebaut und haben neben einer gegebenenfalls COC-haltigen Basisschicht beidseitig COC-haltige Zwischenschichten. In einer weiteren Ausführungsform kann die COC-haltige Schicht eine Deckschicht/en auf der Basis- oder der Zwischenschicht bilden. Gegebenenfalls können beide Deckschichten COC-haltig sein. Die Basisschicht ist im Sinne der vorliegenden Erfindung diejenige Schicht, welche mehr als 30 % bis 100 %, vorzugsweise 50 bis 90 %, der Gesamtfoliendicke ausmacht und die größte Schichtdicke aufweist. Die Deckschichten sind die Schichten, welche die äußeren Schichten der Folie bilden. Zwischenschichten sind naturgemäß zwischen der Basisschicht und den Deckschichten angebracht.

Die COC-haltige Schicht, welche gegebenenfalls die einzige Schicht der erfindungsgemäßen Folie ist, enthält ein Polymeres I aus mindestens einer Hydroxycarbonsäure, mindestens ein COC sowie gegebenenfalls weitere zugesetzte Additive in jeweils wirksamen Mengen. Im allgemeinen enthält diese Schicht mindestens 50 bis 99,5 Gew.-%, vorzugsweise 70 bis 99 Gew.-%, insbesondere 80 bis 95 Gew.-%, eines Polymeren I aus mindestens einer Hydroxycarbonsäure, bezogen auf das Gewicht der Schicht. Polymere I aus mindestens einer Hydroxycarbonsäure sind Homopolymere oder Mischpolymerisate, welche aus polymerisierten Einheiten von, vorzugsweise aliphatischen, Hydroxycarbonsäuren aufgebaut sind. Unter den für die vorliegende Erfindung geeigneten PHC sind insbesondere Polymilchsäuren geeignete. Diese werden nachstehend als PLA (Polylactidacid) bezeichnet. Auch hier sind unter dem Begriff sowohl Homopolymere, welche nur aus Milchsäureeinheiten aufgebaut sind, als auch Mischpolymerisate zu verstehen, welche überwiegend Milchsäureeinheiten (>50%) in Verbindungen mit anderen aliphatischen Hydroxycarbonsäureeinheiten enthalten,

Als Monomere der aliphatischen Polyhydroxycarbonsäuren (PHC) sind insbesondere aliphatische Mono-, Di- oder Trihydroxycarbonsäuren, bzw. deren dimere cyclische Ester geeignet, worunter Milchsäure in ihrer D- oder L-Form bevorzugt ist. Ein geeignetes PLA ist beispielsweise Polymilchsäure der Fa. Cargill Dow (NatureWorks®). Die Herstellung von Polymilchsäure ist im Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet, In den folgenden Veröffentlichungen ist die Herstellung von PLA beschrieben US 5,208,297, US 5,247,058 oder US 5,357,035.

Bevorzugt sind Polymilchsäuren, welche ausschließlich aus Milchsäureeinheiten aufgebaut sind. Hierbei sind insbesondere PLA Homopolymere bevorzugt, welche 80 - 100 Gew.-% L-Mitchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzlich von der Milchsäure verschiedene aliphatische Hydroxycarbonsäureeinheiten als Comonomer aufweisen, beispielsweise Glycolsäureeinheiten, 3-Hydroxypropansäureeinhaiten, 2,2-Dimethyl-3-hydroxypropan-säureeinheiten oder höhere Homologe der Hydroxycarbonsäuren mit bis zu 5 Kohlenstoffatomen.

Bevorzugt sind Milchsäurepolymere (PLA) mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperatur Tg liegt in einem Bereich von 40 bis 100°C, vorzugsweise 40 bis 80°C.

Erfindungsgemäss enthält die COC-haltige Schicht bzw. die Folie bei einschichtigen Ausführungsformen, ein Cycloolefincopolymeres (COC) in einer Menge von mindestens 0,5 Gew.-%, bevorzugt 1 bis 30 Gew.-% und besonders bevorzugt 5 bis 20 Gew.-%, bezogen auf das Gewicht der Schicht bzw. bezogen auf das Gewicht der Folie bei einschichtigen Ausführungsformen.

Cycloolefinpolymere sind Homopolymerisate oder Copolymerisate, welche aus polymerisierte Cycloolefineinheiten und gegebenenfalls acyclische Olefine als Comonomer aufgebaut sind. Für die vorliegende Erfindung sind Cycloolefinpolymere geeignet, die 0,1 bis 100 Gew.-%, bevorzugt 10 bis 99 Gew.-%, besonders bevorzugt 50-95 Gew.-%, jeweils bezogen auf die Gesamtmasse des Cycloolefinpolymeren, polymerisierte Cycloolefineinheiten enthalten. Besonders geeignete Cycloolefinpolymere sind im Einzelnen und detailliert in der EP 1 068 949 beschrieben auf welche hiermit ausdrücklich Bezug genommen wird.

Unter den vorstehend beschriebenen und in der EP 1 068 949 beschrieben Cycloolefincopolymeren sind insbesondere diejenigen bevorzugt, die polymerisierte Einheiten polycyclischer Olefine mit Norbomengrundstruktur, besonders bevorzugt Norbomen oder Tetracyclododecen, enthalten. Besonders bevorzugt sind auch Cycloolefincopolymere (COC), die polymerisierte Einheiten acyclischer Olefine, insbesondere Ethylen, enthalten. Wiederum besonders bevorzugt sind Norbonen/Ethylen- und Tetracyclododecen/Ethylen-Copolymere, welche 5 bis 80 Gew.-%, vorzugsweise 10 bis 60 Gew.-% Ethylen enthalten (bezogen auf das Gewicht des Copolymeren).

Die vorstehend und in der EP 1 068 949 generisch beschriebenen Cycloolefinpolymeren weisen im allgemeinen Glasübergangstemperaturen zwischen 100°C und 400°C auf. Für die Erfindung sind Cycloolefincopolymerisate (COC) verwendbar, die eine Glasübergangstemperatur von größer als 70°C, vorzugsweise größer als 90°C und insbesondere größer als 110°C aufweisen. Die Viskositätszahl (Dekalin, 135°C, DIN 53 728) liegt zweckmäßiger weise zwischen 0,1 und 200 ml/g, bevorzugt zwischen 50 und 150 ml/g.

Die Herstellung der Cycloolefincopolymere (COC) geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-O 283 164, EP-A-O 407 870, EP-A-O 485 893 und EP-A-0 503 422 beschreiben die Herstellung von Cycloolefincopolymeren (COC) mit Katalysatoren, basierend auf löslichen Metallocenkomplexen. Auf die in obengenannten Schriften beschriebenen Herstellungsverfahren von Cycloolefinpolymeren wird hiermit ausdrücklich Bezug genommen.

Die Cycloolefincopolymere werden entweder als reines Granulat oder als granuliertes Konzentrat (Masterbatch) in die Folie eingearbeitet, indem das Granulat aus PHC, vorzugsweise PLA, mit dem Cycloolefincopolymer (COC) bzw. dem Cycloolefincopolymer (COC)-Masterbatch vorgemischt und anschließend dem Extruder zugeführt wird. Im Extruder werden die Komponenten weiter vermischt und auf Verarbeitungstemperatur erwärmt. Dabei ist es für das erfindungsgemässe Verfahren zweckmäßig, daß die Extrusionstemperatur oberhalb der Glasübergangstemperatur Tg des Cycloolefincopolymeren (COC) liegt, im allgemeinen mindestens 10°C, vorzugsweise 15 bis 100°C, insbesondere 20 bis 150°C, über der Glasübergangstemperatur des Cycloolefincopolymeren (COC).

Die Folie weißt bevorzugt neben der COC-haltigen Schicht zusätzlich weitere Schichten auf, welche die Basisschicht, eine Zwischen- oder Deckschicht bilden können. Diese weiteren Schichten sind aus den vorstehend für die COC-haltige Schicht beschriebenen Polyhydroxycarbonsäure (PHC) aufgebaut. Für diese weiteren Schichten sind in gleicher Weise PLA bevorzugt.

Die COC-haltige Schicht und die anderen Schichten können zusätzlich übliche Additive, wie Neutralisationsmittel, Stabilisatoren, Antiblockmittel, Gleitmittel und andere Füllstoffe, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Russ, Titandioxid, Kaolin oder vernetzte Polymerpartikel, z.B. Polystyrol-, Acrylat-, PMMA-Partikel oder vernetzte Silikone. Besonders geeignet ist auch Muskovit-Glimmer mit einer mittleren Partikelgröße (gewichtetes Mittel) von 4,0 - 12µm, vorzugsweise 6 bis 10 µm. Glimmer (engl, Mica) sind bekanntlich plättchenförmige Silikate, deren Formfaktor (aspect ratio) vorzugsweise im Bereich von 5 bis 50 liegt. Die Antiblockmittel- Konzentration beträgt im allgemeinen 0,01 bis maximal 1 Gew.-%, bezogen auf das Gewicht der Deckschicht, wobei transparente Ausführungsformen im Hinblick auf eine niedrige Trübung nicht mehr als 0,5 Gew.-% enthalten sollten. Als Additive können auch Mischungen von zwei und mehreren verschiedenen Antiblockmitteln oder Mischungen von Antiblockmitteln gleicher Zusammensetzung, aber unterschiedlicher Partikelgrösse gewählt werden. Die Partikel können den Polymeren der einzelnen Schichten der Folie in den jeweils vorteilhaften Konzentrationen direkt oder über Masterbatche bei der Extrusion zugegeben werden. Bevorzugt werden Antiblockmittel der oder den Deckschicht/en zugesetzt.

Als Antistatika sind Glycerinfettsäureester besonders geeignet, bei denen eine, zwei oder alle drei Alkoholfunktionen mit einer Fettsäure verestert sind. Bevorzugt sind Monoester, bei welchen nur eine Alkoholgruppe des Glycerins mit einer Fettsäure verestert ist, sogenannte Glycerinmonofettsäureester. Geeignete Fettsäuren dieser Verbindungen haben eine Kettenlänge von 12 bis 20 C-Atomen. Bevorzugt sind Stearinsäure, Laurinsäure oder Ölsäure. Als besonders vorteilhaft hat sich Glycerinmonostearat (GMS) erwiesen. Glycerinfettsäureester wird vorzugsweise in der Deckschicht und insbesondere in einer Menge von 1 bis 10 Gew.-% insbesondere 2 -6 Gew.-% eingesetzt. In einer bezüglich Antistatik besonders vorteilhaften Ausführungsform wird GMS mit einem der vorstehend beschriebenen Antiblockpartikel kombiniert.

In einer weiteren möglichen Ausführungsform werden zur Verbesserung der Antistatik und des Antiblockverhaltens der Deckschicht stärke-basierten Partikel in einer Menge von 0,01 - 10 Gew.-%, insbesondere 0,01 bis 5 Gew.-%, bezogen auf das Gewicht der Deckschicht, zugefügt. Geeignet sind modifiziert und unmodifizierte Stärkearten, die beispielsweise auf Kartoffelstärke, Maisstärke oder Weizenstärke basieren. Die ursprüngliche Teilchengröße der Partikel ist vergleichsweise unkritisch, da die Stärkepartikel bei der Folienextrusion zerkleinert werden. Die Stärkepartikel weisen in der Folie im allgemeinen eine absolute Teilchengröße von 1 bis 15 µm auf und können eine beliebige, regelmäßige oder unregelmäßige Teilchenform aufweisen.

Zu Verbesserung des Weissgrades der PHC-Folie kann die COC-haltige Schicht oder mindestens eine der weiteren Schichten ein Pigment enthalten. Hierbei hat es sich als besonders günstig erwiesen, als zusätzliche Additive Bariumsulfat in einer mittlere Teilchengröße von 0,3-0,8µm, vorzugsweise 0,4-0,7 µm oder Titandioxid mit einer mittleren Teilchengröße von 0,05-1µm, auszuwählen. Die Folie erhält hierdurch ein brillantes, weißes Aussehen. Im allgemeinen enthält die COC-haltige Schicht und/oder eine weitere Schicht in diesen Ausführungsformen 1 bis 25 Gew.-%, vorzugsweise über 1 bis 20 Gew.-%, und insbesondere 1 bis 15 Gew.-% Pigmente jeweils bezogen auf das Gewicht der Schicht.

Die Gesamtdicke der Folie kann innerhalb weiter Grenzen variieren und richtet sich nach dem beabsichtigten Verwendungszweck. Die bevorzugten Ausführungsformen der erfindungsgemässen Folie haben Gesamtdicken von 4 bis 200 µm, wobei 8 bis 150 µm, insbesondere 10 bis 100 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die angegebenen Werte beziehen sich jeweils auf eine Zwischenschicht. Die Dicke der Deckschicht/en wird unabhängig von den anderen Schichten gewählt und liegt bevorzugt im Bereich von 0,1 bis 5 µm, insbesondere 0,2 bis 3 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die verschiedenen vorstehend beschriebenen Ausführungsformen der Folie können als Substrat für eine anschließende Metallisierung verwendet werden. Hierbei haben sich insbesondere solche Ausführungsformen als besonders vorteilhaft erwiesen, welche auf der Oberfläche einer COC-haltigen Schicht metallisiert werden, d.h. einschichtige Ausführungsformen und solche mit einer entsprechenden COC haltigen Schicht als Deckschicht. Es wurde gefunden daß Schichten aus COC und Polymer aus mindestens einer Hydroxycarbonsäure eine besonders gute Metallhaftung aufweisen.

Des weiteren kann die beschriebene opake Folie als Etikettenfolie eingesetzt werden, sowie als Verpackungsfolie zur Verpackung von Lebensmitteln und Gebrauchsgütern. Auf Grund vorteilhafter Dreheinschlagseigenschaften, die an sich von PLA Folie bekannt sind und die durch den Zusatz des vakuolenbildenden COCs nicht beeinträchtigt werden, eignet sich die Folie auch sehr gut für Dreheinschlagsverpackungen für Bonbons, Tampons und ähnliches.

Die Erfindung betrifft ein Verfahren zur Herstellung der opaken vakuolenhaltigen PHC-Folie, vorzugsweise PLA-Folie. Erfindungsgemäß wird die PHC-Folie, vorzugsweise PLA-Folle, mittels Simultanstreckverfahren hergestellt. Simultanstreckverfahren umfassen im Sinne der vorliegenden Erfindung Verfahren bei einer Ringdüse. Diese Verfahren sind an sich im Stand der Technik bekannt.

Bei einer Verstreckung nach dem vorstehend beschrieben LISIM oder MESIM-Verfahren wird die Folie im allgemeinen in der Vorheizzone auf eine Strecktemperatur zwischen dem Glaspunkt und dem Schmelzpunkt der Polyhydroxycarbonsäure aufgeheizt. Für PLA ist ein Temperaturbereich von 60 - 150°C bevorzugt, insbesondere 70 - 110°C, insbesondere 80 - 100°C, bei welcher die simultane Verstreckung schließlich erfolgt. Die Streckverhältnisse können flexibel gewählt werden, so daß die Folie unterschiedlichen Anforderung je nach Einsatzgebiet entsprechen kann. Der Streckfaktor in Querrichtung beträgt für PLA-Folien 4 - 7, vorzugsweise 5 -7 und der entsprechende Streckfaktor in Längsrichtung 3- 6, vorzugsweise 4 -6.

An die Streckung der Folie schließ sich die beschriebene Thermofixierung (Wärmebe□hand□lung) an, bei der die Folie etwa 0,1 bis 10 s lang bei einer Temperatur von 60 bis 150°C gehalten wird. Anschließend wird die Folie in üblicher Weise mit einer Aufwickeleinrichtung aufgewickelt.

Gegebenenfalls kann zur Einstellung weiterer Eigenschaften die Folie beschichtet werden. Typische Beschichtungen sind haftvermittelnde, antistatisch, schlupf□verbessernd oder dehäsiv wirkende Schichten. Gegebenenfalls können diese zusätzlichen Schichten über in-line coating mittels wässriger Dispersionen vor der Querwerstreckung oder off-line aufgetragen werden.

Die erfindungsgemässe Folie zeichnet sich durch einen guten Weissgrad und durch eine gute Opazität aus. Sie eignet sich hervorragend zur Verpackung von licht- und/oder luftempfindlichen Nahrungs- und Genussmitteln. Daneben ist sie auch für den Einsatz im industriellen Bereich, z.B. bei der Herstellung von Prägefolien oder als Etikettenfolie, geeignet. Es wurde gefunden, daß durch den Zusatz von COC vakuolenartige Hohlräume in der Folie erzeugt werden, welche die Dichte der Folie, gegenüber der entsprechenden Dichte der Rohstoffe, reduzieren. Die Dichte liegt erfindungsgemäß im Bereich von 0,6 bis 1 g/cm³.

Des weiteren zeichnet sich die Folie durch überraschend niedrige Schrumpfwerte aus. Dies ist in einigen Verpackungsanwendungen wünschenswert. Hierbei überrascht insbesondere, daß gegenüber der Simultanverstreckung transparenter PHC-Folien lediglich der Zusatz von COC diese signifikante Reduzierung des Schrumpfes bewirkt. Somit können erfindungsgemäß auf Grund der Simultanverstreckung in Kombination mit dem COC-Zusatz PLA-Folien mit einem Längsschrumpf und einem Querschrumpf von jeweils unter 3%, vorzugsweise >0 bis 2%, insbesondere >0 bis 1% hergestellt werden. Dies sind für die inhärent hochschrumpfenden PLA-Folien extrem niedrige Schrumpfwerte.

Für andere Anwendungen können die Verfahrensbedingungen jedoch auch so variiert werden, daß der Schrumpf in Längs- und/oder Querrichtung mehr als 3% beträgt und für die individuellen Anwendungen über einen sehr breiten Bereich eingestellt werden kann. Somit können nach dem erfindungsgemäßen Verfahren Folie mit einem moderaten Schrumpf in einem Bereich von ≥3 bis 8% in MD- und/oder TD-Richtung hergestellt werden. Für andere Anwendungen, wie beispielsweise Schmmpfetiketten, können jedoch auch hochschrumpfende Folien mit >8 bis 50%, vorzugsweise 10 bis 40% Schrumpf in MD- und/oder TD-Richtung beträgt.

Das erfindungsgemäße Verfahren hat somit auch den Vorteil, daß die Schrumpf□eigenschaften der PHC-Folien durch eine vergleichsweise einfache Variation der Verfahrensbedingungen über einen sehr großen Bereich variiert werden können. Durch entsprechende Einstellung verschiedener Temperaturen in den Fixierfeldern und leichte Anpassungen bei der Konvergenz können nahezu alle Bereiche von niedrig-, mittel- bis hochschrumpfend abgedeckt. Damit bietet das Verfahren erhebliche logistische Vorteile da mit der gleichen Folienrezeptur unterschiedliche Schrumpffolien, bzw. sogar nichtschrumpfende Folien der gleichen Zusammensetzung hergestellt werden können.

Im Rahmen einer besonders bevorzugten Variante des erfindungsgemäßen Verfahrens weist das Cycloolefincopolymere (COC) eine Glasübergangstemperatur im Bereich von 80 bis 200°C auf.

Im Rahmen einer weiteren besonders bevorzugten Variante des erfindungsgemäßen Verfahrens ist das Cycloolefincopolymer (COC) Polynorbornen, Polydimethyloctahydronaphthalin, Polycyclopenten oder Poly(5-methyl)norbornen.

Im Rahmen noch einer weiteren besonders bevorzugten Variante des erfindungsgemäßen Verfahrens hat die Polyhydrocarbonsäure, vorzugsweise die Polymilchsäure, einen Schmelzpunkt von 110 - 170°C und einen Schmelzflußindex von 1-50 g/10min.

Im Rahmen einer weiteren besonders bevorzugten Variante des erfindungsgemäßen Verfahrens bildet die COC-haltigen Schicht die Basisschicht der Folie und zusätzlich ist/sind auf dieser Basisschicht ein oder beidseitig Deckschichten aufgebracht, welche aus mindestens einer Polyhydroxycarbonsäure aufgebaut ist.

Im Rahmen noch einer weiteren besonders bevorzugten Variante des erfindungsgemäßen Verfahrens ist die Folie auf mindestens einer Oberfläche metallisiert.

Zur Charakterisierung der Rohstoffe und der Folien wurden die folgenden Meßwerte benutzt:

Weissgrad und Opazität

Die Bestimmung des Weissgrades und der Opazität erfolgt mit Hilfe des elektrischen Remissionsphotometers "ELREPHO" der Firma Zeiss, Oberkochern (DE), Normlichtart C, 2 DEG Normalbeobachter. Die Opazität wird nach DIN 53 146 bestimmt. Der Weissgrad wird als WG = RY + 3RZ - 3RX definiert. WG = Weissgrad, Rx, Ry, Rz = entsprechende Reflexionsfaktoren bei Einsatz des Y-, Z-und X-Farbmessfilters. Als Weissstandard wir ein Pressling aus Bariumsulfat (DIN 5033, Teil 9) verwendet. Eine ausführliche Beschreibung ist z.B. in Hansl Loos "Falbmessung", Verlag Beruf und Schule, Itzehoe (1989), beschrieben. Lichtdurchlässigkeit
Die Lichtdurchlässigkeit wird in Anlehnung an ASTM-D 1033-77 gemessen.

Schrumpf:

Die Längs- und Quersehrumpfwerte beziehen sich auf die jeweilige Längen□ausdehnung der Folie (längs L0 und quer Q0) vor dem Schrumpfprozeß. Die Längsrichtung ist die Maschinenrichtung, als Querrichtung wird entsprechend die Richtung quer zum Maschinenlauf definiert. Das Folienmuster von 10cm* 10cm wird im Umluft□ofen bei 100°C über eine Dauer von 5 min geschrumpft. Anschließend werden die verbliebenen Längen□ausdehnungen des Musters längs und quer erneut bestimmt (L 1 und Q1). Als Schrumpf in % wird dann die Differenz der ermittelten Längen im Verhältnis zur ur□sprünglichen Länge L0 und Q0 mal 100 angegeben.

L₀ - L₁

Längsschrumpf Lₛ [%]= ---------- *100[%]

L₀

Q₀ - Q₁

Querschrumpf Qₛ [%]= ---------- *100[%]

Q₀

Diese Bestimmungsmethode für den Längs- und Querschrumpf entspricht DIN 40634.

### Glasübergangstemperatur

Die Glasübergangstemperatur Tg wurde anhand von Folienproben mit Hilfe der DSC (Differential Scanning Calorimetry) bestimmt (DIN 73 765). Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang Tg ermittelt. Die Proben zeigten vielfach eine Enthalpierelaxation (ein Peak) zu Beginn des stufenförmige Glasübergangs. Als Tg wurde die Temperatur genommen, bei der die stufenförmig Veränderung der Wärmekapazität - unabhängig von der peakförmigen Enthalpierelaxation - ihre halbe Höhe im ersten Aufheizvorgang erreicht. In allen Fällen wurde nur eine einzige Glasübergangsstufe im Thermogramm beim ersten Aufheizen beobachtet.

Die Erfindung wird nachstehend an Hand von Ausführungsbeispielen erläutert

Beispiel 1:

Es wurde durch Extrusion und anschließende simultane Verstreckung auf einer LISIM-Anlage eine opake dreischichtige PLA-Folie mit einer Dicke von 30 µm hergestellt. Die Basisschicht war zu ca. 90 Gew.-% aus einem teilkristallinen Polymilchsäurerohstoff (4042D der Fa. Natureworks® mit einem Schmelz□punkt von 145°C und einem Schmelzflußindex von ca. 3 g/10min bei 210°C und einer Glastemperatur von 60 °C) und ca. 10 Gew.-% COC (Ticona Topas 6013 S-04) mit einer Tg von 140°C aufgebaut. Als Deckschichtrohstoff wurde der Polymilchsäurerohstoff 4042 D der Fa. Natureworks® zu 100% eingesetzt. Die Dicke der einzelnen Deckschichten betrug 3 µm. Die Schichten enthielten zusätzlich Stabilisatoren und Neutralisationsmittel in üblichen Mengen. Die Herstellbedingungen in den einzelnen Verfahrensschritten waren:

Extrusion: Temperaturen 170 - 200°C

Temperatur der Abzugswalze: 30°C

Strecktemperatur im LISIM-Rahmen: 92 °C

Längsstreckverhältnis: 4,5

Querstreckverhältnis (effektiv): 5,5

Fixierung: Temperatur: 135 °C

Beispiel 2:

Es wurde eine Folie mit der gleichen Zusammensetzung wie in Beispiel 1 beschrieben hergestellt. Analog wie in Beispiel 1 beschrieben wurde durch Extrusion und anschließende simultane Verstreckung auf einer LISIM-Anlage eine opake dreischichtige PLA-Folie mit einer Dicke von ebenfalls 30 µm hergestellt. Bei den Herstellbedingungen wurde dabei gegenüber Bsp. 1 die Strecktemperatur und die Temperatur in der Fixierung reduziert. Die Einstellungen in den einzelnen Veiiahrensschritten waren:

Extrusion: Temperaturen 170 - 200°C

Temperatur der Abzugswalze: 30°C

Strecktemperatur im LISIM-Rahmen: 88 °C

Längsstreckverhältnis: 4,5

Querstreckverhältnis (effektiv): 5,5

Fixierung: Temperatur: 90 °C

Vergleichsbeispiel 1:

Es wurde durch Extrusion und anschließende stufenweise Orientierung erst in Längs-und dann in Querrichtung eine opake dreischichtige PLA-Folie mit einer Dicke von 50 µm hergestellt. Die Basisschicht war zu ca. 90 Gew.-% aus einem teilkristallinen Polymilchsäurerohstoff (4042D der Fa. Natureworks®) mit einem Schmelz□punkt von 145°C und einem Schmelzflußindex von ca. 3 g/10min bei 210°C und einer Glastemperatur von 60 °C und ca. 10 Gew.-% COC (Ticona Topas 6013 S-04) mit einer Tg von 140°C aufgebaut. Als Deckschichtrohstoff wurde der Polymilchsäure□rohstoff (4060D der Fa. Natureworks®) eingesetzt. Die Dicke der einzelnen Deckschichten betrug 3 µm. Die Schichten enthielten zusätzlich Stabilisatoren und Neutralisationsmittel in üblichen Mengen. Die Herstellbedingungen in den einzelnen Verfahrensschritten waren:

Extrusion: Temperaturen 170 - 200°C

Temperatur der Abzugswalze: 30°C

Längsstreckung: Temperatur: 68 °C

Längsstreckverhältnis: 2,5

Querstreckung: Temperatur: 78 °C

Querstreckverhältnis (effektiv): 5,5

Fixierung: Temperatur: 135 °C

Die Eigenschaften der Folien nach den Beispielen und dem Vergleichsbeispiel sind in der nachfolgenden Tabelle zusammengefaßt:

**Tabelle 1**

| | Bsp. 1 | Bsp. 2 | VB1 |
|---|---|---|---|
| Dichte g/cm² | 1,00 | 0,90 | 1,05 |
| Opazität / % | 54 | 60 | 64 |
| Weißgrad / % | 56 | 60 | 65 |
| Reißfestigkeit MD N/mm² | 120 | 120 | 70 |
| Reißfestigkeit TD N/mm² | 135 | 135 | 225 |
| Schrumpf MD / % | 1 | 20 | 2 |
| Schrumpf TD / % | 1 | 22 | 11 |

## Patentansprüche

1. Verfahren zur Herstellung einer Polyhydroxycarbonsäure-Folie, **dadurch gekennzeichnet, daß** man eine Schmelze aus Polyhydroxycarbonsäure (PHC), vorzugsweise PLA und 0,5 bis 30 Gew.-% Cycloolefincopolymer (COC), bezogen auf das Gewicht der Mischung, und gegebenenfalls weiteren Zusatzstoffen extrudiert, wobei diese Schmelzetemperatur mindestens 10°C über der Glasübergangstemperatur Tg des COC liegt und die Schmelze zu einer Vorfolie abkühlt, und anschließend die abgekühlte Vorfolie bei einer Temperatur von mehr als 40°C simultan in Längs- und Querrichtung verstreckt .

2. Verfahren nach Anspruch 1, **dadurch gekennzeichnet, daß** die Folie mit einem Streckfaktor von 3 bis 6 in Längsrichtung und mit einem Streckfaktor von 4 bis 7 in Querrichtung erfolgt.

3. Verfahren nach Anspruch 1, **dadurch gekennzeichnet, daß** die Schmelze aus einer Flachdüse extrudiert wird und die Simultan-Verstreckung über Kluppen erfolgt, die auf divergierenden Führungsschienen verfahrbar sind und während der Verstreckung in Laufrichtung der Folie derart beschleunigt werden, daß sich der Abstand der Kluppen zueinander vergrößert, wodurch gleichzeitig mit der Längsverstreckung die Verstreckung der Folie in Querrichtung erfolgt.

4. Verfahren nach Anspruch 3, **dadurch gekennzeichnet, daß** die Beschleunigung der Kuppen mittels gesteuerter Linearmotoren erfolgt.

5. Verfahren nach Anspruch 3, **dadurch gekennzeichnet, daß** die Kluppen mittels eines Scherengelenks untereinander verbunden sind und deren Abstand durch Auseinanderrücken des Scherengelenks erfolgt.

6. Verfahren nach Anspruch 1, **dadurch gekennzeichnet, daß** das Cycloolefincopolymeres (COC) eine Glasübergangstemperatur im Bereich von 80 bis 200 °C aufweist.

7. Verfahren nach Anspruch 1, **dadurch gekennzeichnet, daß** die Folie in Längs-und Querrichtung weniger als 3%, vorzugsweise weniger als 2% Schrumpf aufweist.

8. Verfahren nach Anspruch 1, **dadurch gekennzeichnet, daß** die Folie in Längs-und/oder Querrichtung ≥ 3%, vorzugsweise >8-50% Schrumpf aufweist.

9. Verfahren nach Anspruch 1, **dadurch gekennzeichnet, daß** das Cycloolefincopolymer (COC) Polynorbomen, Polydimethyloctahydronaphthalin, Polycyclopenten oder Poly(5-methyl)norbornen ist.

10. Verfahrens nach Anspruch 1, **dadurch gekennzeichnet, daß** die Polyhydroxycarconsaure aus Milchsäureeinheiten aufgebaut ist.

11. Verfahren nach Anspruch 1, **dadurch gekennzeichnet, daß** die Polyhydroxycarbonsäure einen Schmelzpunkt von 110 bis 170°C und einen Schmelzflußindex von 1 bis 50 g/10min. hat.

12. Verfahren nach Anspruch 1, **dadurch gekennzeichnet, daß** die COC-haltige Schicht die Basisschicht der Folie bildet und zusätzlich auf dieser Basisschicht ein oder beidseitig Deckschichten aufgebraucht ist/sind, welche aus mindestens einer Polyhydroxycarbonsäure aufgebaut ist/sind.

13. Verfahren nach Anspruch 13, **dadurch gekennzeichnet, daß** die Folie einschichtig ist und aus der COC-haltigen Schicht besteht.

14. Verfahren nach Anspruch 1, **dadurch gekennzeichnet, daß** die Folie einen Dichte von weniger als 1,25 g/cm3, vorzugsweise 0,6 bis 1 g/cm3, aufweist.

15. Verfahren nach Anspruch 1, **dadurch gekennzeichnet, daß** die Folie auf mindestens einer Oberfläche metallisiert ist.

## Claims

1. A method for producing a polyhydroxycarboxylic acid film, **characterized in that** a melt of polyhydroxycarboxylic acid (PHC), preferably PLA, and 0.5 to 30 wt% cycloolefin copolymer (COC), based on the weight of the mixture, and optionally additional additives is extruded, such that this melting point is at least 10°C above the glass transition temperature Tg of the COC, and the melt cools to form a pre-film and then the cooled pre-film is drawn in both longitudinal and transverse directions simultaneously at a temperature of more than 40°C.

2. The method according to Claim 1, **characterized in that** the film is stretched with a stretch factor of 3 to 6 in the longitudinal direction and with a stretch factor of 4 to 7 in the transverse direction.

3. The method according to Claim 1, **characterized in that** the melt is extruded from a flat nozzle and the simultaneous stretching is accomplished by means of clips, which can be moved on diverging guide rails and are accelerated in the direction of movement of the film during the stretching, such that the spacing of the clips in relation to one another is increased, so that the stretching of the film in the transverse direction occurs simultaneously with the longitudinal stretching.

4. The method according to Claim 3, **characterized in that** the acceleration of the clips is accomplished by means of controlled linear motors.

5. The method according to Claim 3, **characterized in that** the clips are interconnected by a scissors joint and their spacing is accomplished by the outward movement of the scissors-type joint.

6. The method according to Claim 1, **characterized in that** the cycloolefin copolymer (COC) has a glass transition temperature in the range of 80 to 200°C.

7. The method according to Claim 1, **characterized in that** the film has less than 3% shrinkage in the longitudinal and transverse directions, preferably less than 2%.

8. The method according to Claim 1, **characterized in that** the film has ≥3% shrinkage, preferably >8-50% shrinkage in the longitudinal and/or transverse directions.

9. The method according to Claim 1, **characterized in that** the cycloolefin copolymer (COC) is polynorbomene, polydimethyloctahydronaphthalene, polycyclopentene or poly(5-methyl)norbornene.

10. The method according to Claim 1, **characterized in that** the polyhydroxycarboxylic acid is composed of lactic acid units.

11. The method according to Claim 1, **characterized in that** the polyhydroxycarboxylic acid has a melting point of 110 to 170°C and a melt-flow index of 1 to 50 g/10 min.

12. The method according to Claim 1, **characterized in that** the COC-containing layer forms the base layer of the film, and cover layers composed of at least one polyhydroxycarboxylic acid are applied to this base layer on one or both sides.

13. The method according to Claim 13, **characterized in that** the film is in one layer and consists of the COC-containing layer.

14. The method according to Claim 1, **characterized in that** the film has a density of less than 1.25 g/cm³, preferably 0.6 to 1 g/cm³.

15. The method according to Claim 1, **characterized in that** the film is metallized on at least one surface.

## Revendications

1. Procédé de production d'un film en acide polyhydroxycarboxylique, **caractérisé en ce qu'**on extrude une masse fondue en acide polyhydroxycarboxylique (PHC), de préférence en PLA et de 0,5 à 30 % en poids d'un polymère de cyclooléfine (COC), en rapport au poids du mélange, et le cas échéant d'autres adjuvants, ladite température de la masse fondue étant supérieure d'au moins 10°C à la température de transition vitreuse Tg du COC et **en ce qu'**on refroidit la masse fondue en un préfilm et suite à quoi, on étire le préfilm refroidi simultanément en direction longitudinale et transversale à une température supérieure à 40°C.

2. Procédé selon la revendication 1, **caractérisé en ce que** l'étirage du film s'effectue avec un coefficient d'étirage de 3 à 6 en direction longitudinale et de 4 à 7 en direction transversale.

3. Procédé selon la revendication 1, **caractérisé en ce qu'**on extrude la masse fondue hors d'une filière pour feuilles et **en ce que** l'étirage simultané s'effectue par des filières qui sont déplaçables sur des coulisses divergentes et qui pendant l'étirage dans la direction de déplacement du film sont accélérées de telle sorte que l'écart réciproque entre les filières s'agrandisse, l'étirage du film en direction transversale s'effectuant simultanément à l'étirage longitudinal.

4. Procédé selon la revendication 3, **caractérisé en ce que** l'accélération des filières s'effectue au moyen de moteurs linéaires commandés.

5. Procédé selon la revendication 3, **caractérisé en ce que** les filières sont reliées entre elles au moyen d'une articulation en cisaille et **en ce que** leur écart s'effectue par accroissement de l'espacement de l'articulation en cisaille.

6. Procédé selon la revendication 1, **caractérisé en ce que** le polymère de cyclooléfine (COC) présente une température de transition vitreuse de 80 à 200 °C.

7. Procédé selon la revendication 1, **caractérisé en ce qu'**en direction longitudinale et transversale, le film fait preuve d'un retrait inférieur à 3%, de préférence inférieur à 2%.

8. Procédé selon la revendication 1, **caractérisé en ce qu'**en direction longitudinale et/ou verticale, le film fait preuve d'un retrait ≥ 3%, de préférence > 8 à 50%.

9. Procédé selon la revendication 1, **caractérisé en ce que** le polymère de cyclooléfine (COC) est du polynorbornène, du polydiméthyl-octahydronaphthalène, du polycyclopentène ou du poly(5-méthyl)norbornène.

10. Procédé selon la revendication 1, **caractérisé en ce que** l'acide polyhydroxycarboxylique est constitué d'unités d'acide lactique.

11. Procédé selon la revendication 1, **caractérisé en ce que** l'acide polyhydroxycarboxylique présente un point de fusion de 110 à 170°C et un indice de fusion complète de 1 à 50 g/10 mn.

12. Procédé selon la revendication 1, **caractérisé en ce que** la couche contenant du COC forme la couche de base du film et en supplément de ladite couche de base, une/des couche(s) de recouvrement constituée(s) d'au moins un acide polyhydroxycarboxylique est/sont appliquée(s) sur une face ou sur deux faces.

13. Procédé selon la revendication 13, **caractérisé en ce que** le film est monocouche et consiste dans la couche contenant du COC.

14. Procédé selon la revendication 1, **caractérisé en ce que** le film présente une densité inférieure à 1,25 g/cm³, de préférence de 0,6 à 1 g/cm³.

15. Procédé selon la revendication 1, **caractérisé en ce que** le film est métallisé sur au moins une surface.
